(19) Europäisches Patentamt
European Patent Office
Office européen des brevets

(11) **EP 1 827 858 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(21) Anmeldenummer: **05797680.5**

(22) Anmeldetag: **15.10.2005**

(51) Int Cl.:
***B41M 5/26*** *(2006.01)*     ***C08K 3/00*** *(2006.01)*

(86) Internationale Anmeldenummer:
**PCT/EP2005/011098**

(87) Internationale Veröffentlichungsnummer:
**WO 2006/042714 (27.04.2006 Gazette 2006/17)**

(54) **LASERMARKIERBARE FORMMASSEN UND DARAUS ERHÄLTLICHE PRODUKTE UND VERFAHREN ZUR LASERMARKIERUNG**

LASER-MARKABLE MOLDING MASSES AND PRODUCTS OBTAINED THEREFROM AND METHOD FOR LASER MARKING

MATIERES MOULABLES MARQUABLES AU LASER ; PRODUITS OBTENUS A PARTIR DE CES MATIERES ET PROCEDE DE MARQUAGE AU LASER

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.10.2004 DE 102004050557**

(43) Veröffentlichungstag der Anmeldung:
**05.09.2007 Patentblatt 2007/36**

(60) Teilanmeldung:
**10178028.6**

(73) Patentinhaber: **Ticona GmbH**
**65451 Kelsterbach (DE)**

(72) Erfinder:
• **CLAUSS, Joachim**
**64297 Darmstadt-Eberstadt (DE)**
• **WITAN, Kurt**
**65719 Hofheim (DE)**
• **SCHNELLER, Arnold**
**64342 Seeheim-Jugenheim (DE)**
• **KURZ, Klaus**
**65451 Kelsterbach (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**EP-A- 0 697 433     DE-A1- 10 053 639**
**DE-A1- 19 538 247     US-A- 5 750 318**

EP 1 827 858 B1

**Beschreibung**

Die vorliegende Erfindung betrifft neue Formmassen basierend auf teilkristallinen technischen Thermoplasten, die lasermarkierbare Formteile mit erhöhter Markierungsgüte ergeben. Weiterhin betrifft die Erfindung Formteile, die aus solchen lasermarkierbaren Formmassen hergestellt werden, ein Verfahren zur Lasermarkierung sowie die Verwendung ausgewählter Zusätze zur Lasermarkierung.

Teilkristalline Thermoplaste werden seit langem als Werkstoffe eingesetzt. Neben ihren mechanischen, thermischen, elektrischen und chemischen Eigenschaften gewinnen zunehmend Funktionalitäten wie die Markierbarkeit mit Laserlicht an Bedeutung. Beispielhaft sollen Anwendungen im Haushaltswarenbereich, bei Tastaturen und im Elektronikbereich genannt werden. Hier ist für die Anwendung ein hoher Kontrast zwischen der laserbeschriebenen Markierung und der Polymermatrix als Hintergrund gefordert. Weiterhin ist für die Ästhetik eine gezielte Einstellung der Markierungs- sowie Matrixfarbe sowie der Oberflächenbeschaffenheit der Markierung von Vorteil. Vor allem, wenn die lasermarkierten Oberflächen im Gebrauch üblicherweise sichtbar oder regelmäßig mechanischen oder chemischen Belastungen ausgesetzt sind, soll die Dauerhaftigkeit bei hoher Wertanmutung gewährleistet sein. Dies stellt in vielen Fällen eine Hürde für den Einsatz von teilkristallinen technischen Thermoplasten dar.

Lasermarkierbare Formmassen sind an sich bekannt. Eine Möglichkeit der Markierung dieser Formmassen mit Laserlicht besteht darin, den Kunststoff an ausgewählten Stellen mit Laserlicht zu bestrahlen und durch die eingebrachte Energie eine mechanische Veränderung oder eine lokale Verfärbung des Kunststoffes zu bewirken. Eine weitere Möglichkeit der Markierung dieser Formmassen mit Laserlicht besteht darin, verfärbbare Füllstoffe einzusetzen, die durch Einstrahlung von Laserlicht an ausgewählten Stellen ihre Farbe ändern.

Aus der EP-A-190,997 ist ein Verfahren zur Lasermarkierung von pigmentierten Systemen bekannt, bei dem in ein hochmolekulares Material ein eine Verfärbung verursachender und strahlungsempfindlicher Zusatzstoff eingearbeitet wird. Als Zusatzstoffe werden unter anderem $TiO_2$ und $Sb_2O_3$ offenbart.

Der Einsatz unterschiedlichster Zusatzstoffe in lasermarkierbaren Kunststoff-Formmassen wird in verschiedensten Patentdokumenten beschrieben. So ist aus der EP-A-330,869 der Einsatz von $TiO_2$-Weisspigment bekannt. Die EP-A-400,305 und die EP-A-542,115 beschreiben die Verwendung von Kupferhydroxidphosphat bzw. von Molybdän-(IV)-oxid.

In der US-A-5,063,137 wird unter anderem die Verwendung von wasserfreien Metallphosphaten und Phosphorsäure-basierenden Gläsern offenbart.

Die EP-A-797,511 beschreibt den Einsatz von plättchenförmigen Pigmenten mit einer Schicht aus dotiertem Zinnoxid.

In der US-A-5,489,639 wird der Einsatz ausgewählter Kupfersalze (Phosphate, Sulfate, Thiocyanate) beschrieben.
Die EP-A-764,683 offenbart die Verwendung von Kupferpyrophosphat-Hydrat und/oder Mangansulfathydrat.

Aus der EP-A-808,866 ist der Einsatz von Borsäureanhydrid bekannt.

WO-A-98/58805 offenbart eine Reihe von Kupferphosphaten.

WO-A-99/55773 beschreibt unter anderem die Verwendung von Zinkhydroxystannat und Zinn(II)oxalat.

Aus der DE-A-199 05 358 ist die Verwendung von Alkalikupferdiphosphat bekannt.

WO-A-01/00719 beschreibt den Einsatz von $Sb_2O_3$ mit Teilchengrößen oberhalb von 0,5 $\mu$m.

Aus der EP-A-1,190,988 ist die Verwendung von bestimmten Wismut-Mischoxiden bekannt.

In der WO-A-01/78994 wird der Einsatz von Kupferfumarat, Kupfermaleat sowie deren Mischungen vorgeschlagen.

In der DE-A-100 53 639 wird die Verwendung ausgewählter Salze, unter anderem verschiedener Kobalt- und Eisenphosphate, vorgeschlagen.

Die DE-A-100 34 472 beschreibt die Verwendung von mit bestimmten Siliziumverbindungen oberflächenmodifizierten Teilchen.

In der EP-A-753,536 wird der Einsatz von mindestens zwei Arten von Metalloxiden beschrieben.
Die EP-A-1 05,451 beschreibt Polyphenylensulfid-Formmassen, die zur Lasermarkierung mit ausgewählten Zusätzen, beispielsweise mit der Kombination von Bleichromat und Bleimolybdat, mit Nickel-Antimon-Titanat oder mit Kobalt-Zink-Silizium modifiziert worden sind.

Die bislang verfügbaren lasermarkierbaren Kunststoff-Formmassen sind in mancherlei Hinsicht noch zu verbessern.

Zur Laserbeschriftbarkeit eingesetzte Pigmente ergeben häufig nur einen ungenügenden Farbunterschied zwischen der markierten Stelle und der unbelichteten Kunststoffmatrix und damit einen schlechten Farbkontrast und eine schlechte Lesbarkeit der Beschriftung. In anderen Fällen verändert sich der anfangs akzeptable Farbkontrast mit der Zeit, so dass die Beschriftung mehr oder weniger verschwindet. Bei Zusatz von zunehmenden Pigmentmengen besteht außerdem die Gefahr einer unerwünschten Veränderung der Kunststoffeigenschaften.

Wird als lasersensitives Additiv ein lichtstreuendes Teilchen eingesetzt, das als Weißpigment wirkt, so ist dieser Ansatz dadurch limitiert, daß mit zunehmendem Gehalt an Additiv zwar die Lichtempfindlichkeit zunimmt aber sowohl der Markierungskontrast als auch die Eindringtiefe der Markierung zurückgehen kann.

Wird eine Metallverbindung (z.B. Oxid oder Salz) eingesetzt, so trägt in der Regel die jeweilige Eigenfarbe zur Verfärbung der Matrix bei und ist im allgemeinen der Ästhetik abträglich.

Ausgehend von dem oben genannten Stand der Technik liegt der vorliegenden Erfindung die Aufgabe zugrunde, Formmassen basierend auf teilkristallinen technischen Thermoplasten bereitzustellen, die mit üblichen Lasern markiert werden können, und bei denen mit gutem Markierungskontrast die Farbe der Matrix, die Farbe der Markierung sowie die Oberflächentopologie der Markierung optimiert werden können, ohne daß dabei das übrige Eigenschaftsprofil der technischen Thermoplasten unangemessen leidet.

Überraschend wurden nun Formmassen gefunden, bei denen die beschriebenen Nachteile ausreichend vermieden werden können.

Die vorliegende Erfindung betrifft lasermarkierbare Formmassen enthaltend

A) mindestens einen teilkristallinen Thermoplasten, und

B) mindestens eine partikuläre lichtsensitive Mischsalz-Verbindung, die unter dem Einfluß von Laserlicht ihre Farbe ändert oder zu einer Farbänderung im Kunststoff führt und die mehrere Kationen enthält, von denen eines ausgewählt wird aus der Gruppe bestehend aus Ti, Cr, Mn, Fe, Co, Ni, Cu, Zn, Y, Zr, Nb, Mo, Ag, Sn, Sb, La, Pr, Ta, W, Ce und von denen ein weiteres ausgewählt wird aus der Gruppe bestehend aus Elementen der 3.-6. Periode der II, und III. Hauptgruppe, der 5.-6. Periode der IV. Hauptgruppe sowie der 4.-5. Periode der III.-VIII. Nebengruppe des Periodensystems und der Lanthaniden, wobei die enthaltenen Kationen von mindestens zwei unterschiedlichen Elementen stammen und

worin die Anionen die allgemeine Formel $A_aO_o(OH)_y{}^{z-}$ aufweisen, worin A = drei- oder fünfwertiger Phosphor, vier- oder sechswertiger Schwefel, vierwertiges Molybdän oder sechswertiges Wolfram bedeuten, a, o und z unabhängig voneinander ganze Zahlen mit Werten von 1-20 bedeuten, und y eine ganze Zahl mit Werten zwischen 0 und 10 ist und

C) gegebenenfalls mindestens ein partikuläres anorganisches Oxid mit einem mittleren Teilchendurchmesser von weniger als 250 nm und

D) gegebenenfalls weitere übliche Additive.

Erfindungsgemäß werden als Komponente B) partikuläre lichtsensitive Mischsalz-Verbindungen eingesetzt, die mehrere Kationen enthalten. Die Kationen werden im Einzelfall so ausgewählt, dass die salzartige Verbindung B) beim Einmischen in die Komponente A) die Farbe der Formmasse nicht oder in einer gewünschten Weise ändert Ferner werden die Massenvefiältnisse der Kationen zueinander so gewählt, dass sich nach der Bestrahlung der Formmasse an den bestrahlten Stellen zwar deren Helligkeit, nicht aber die Farbe der Matrix ändert.

Die mittlere Teilchengröße ($d_{50}$) der Komponente B ist bevorzugt kleiner als 10 $\mu$m. Geeignete Primärteilchen können von wenigen Nanometern bis hin zu einigen Mikrometern groß sein.

Komponente B muss mindestens zwei unterschiedliche Kationen aus den oben beschriebenen Gruppen enthalten. Gegebenenfalls können weitere Kationen z.B. aus Elementen der 2.-5. Periode der I. Hauptgruppe des Periodensystems enthalten sein.

Erfindungsgemäß werden als Komponente C) partikuläre Additive eingesetzt, die einerseits die Laserlichtempfindlichkeit der Formmasse erhöhen aber andererseits Licht kaum streuen. Anorganische Oxide, die zwar einen von der Matrix unterschiedlichen Brechungsindex aufweisen jedoch Primärteilchen mit einem mittleren Durchmesser ($d_{50}$) unterhalb der Lichtwellenlänge enthalten, erfüllen in der Regel dieses Kriterium.

Die Rezepturkomponenten der erfindungsgemäßen Formmasse sind daher die Matrix (A) enthaltend teilkristalline technische Thermoplaste, sowie die Zusätze (B) in Form von partikulären lichtsensitiven Verbindungen oder Mischungen mit der oben definierten Kombination von Kationen und/oder Zusätze (C) in Form von nanopartikulären anorganischen Oxiden, sowie gegebenenfalls weitere übliche Additive (D).

Überraschenderweise ergänzen sich beide Typen von partikulären Zusätzen in nicht trivialer Weise. Sowohl Komponente B als auch Komponente C erhöhen im Wechselspiel mit der Matrix A die Laserlichtempfindlichkeit.

Die Komponente B beeinflußt gegebenenfalls mit weiteren farbgebenden Additiven oder Pigmenten die Eigenfarbe der Matrix sowie die Farbe der Markierung.

Bei geeigneter Wahl von Komponente C bleibt deren Einfluß auf die Farbausprägung von Matrix und Markierung gering.

Laserbeschriftbare Formmassen im Sinne dieser Anmeldung zeichnen sich dadurch aus, daß bei Einstrahlung von intensivem Licht, bevorzugt aus einer üblichen Laserlichtquelle an der belichteten Stelle eine Farbänderung im Vergleich zur nicht belichteten Matrix auftritt. Dieser Farbunterschied kann als lokal unterschiedliche Leuchtdichte, als lokal unterschiedliche Farbwerte z.B. im CIELab-System oder als lokal unterschiedliche Farbwerte im RGB System erfaßt werden. Diese Effekte können bei unterschiedlichen Lichtquellen auftreten.

Die Auswahl der Komponenten B) und/oder C) erfolgt in der Regel so, daß diese im Wellenlängenbereich des zur Verfügung stehenden Laserlichtes eine möglichst starke Absorption aufweisen.

Die Wellenlängenbereiche des eingesetzten Laserlichtes sind grundsätzlich keinen Beschränkungen unterworfen. Geeignete Laser haben im allgemeinen eine Wellenlänge im Bereich von 157 nm bis 10,6 $\mu$m, vorzugsweise im Bereich von 532 nm bis 10,6 $\mu$m.

Beispielsweise seien hier $CO_2$-Laser (10,6 $\mu$m) und Nd:YAG-Laser (1064 nm) oder gepulste UV-Laser erwähnt.

Typische Excimerlaser weisen folgende Wellenlängen auf: $F_2$-Excimerlaser (157 nm), ArF-Excimerlaser(193 nm), KrCl-Excimerlaser (222 nm), KrF-Excimerlaser (248 nm), XeCl-Excimer-laser (308 nm), XeF-Excimerlaser (351 nm), frequenzvervielfachte Nd:YAG-Laser mit Wellenlängen von 532 nm (frequenzverdoppelt) von 355 nm (frequenzverdreifacht) oder 265 nm (frequenzvervierfacht).

Besonders bevorzugt werden Nd:YAG-Laser (1064 bzw. 532 nm) und $CO_2$-Laser eingesetzt.

Die Energiedichten der erfindungsgemäß eingesetzten Laser liegen im allgemeinen im Bereich von 0,3 mJ/cm$^2$ bis 50 J/cm$^2$, vorzugsweise 0,3 mJ/cm$^2$ bis 10 J/cm$^2$. Bei der Verwendung von gepulsten Lasern liegt die Pulsfrequenz im allgemeinen im Bereich von 1 bis 30 kHz.

Typischerweise enthält die erfindungsgemäße Formmasse 50 bis 99,95 Gew.-%, bevorzugt 80 bis 99,5 Gew.-%, besonders bevorzugt 95 bis 99 Gew.-% an Matrixkomponente (A), die einen oder mehrere der technischen teilkristallinen Thermoplasten enthält. Da die Matrix definitionsgemäß teilkristallin und damit bei sich im Brechungsindex unterscheidenden Domänen nicht transparent ist, tragen vor allem oberflächennahe Komponenten zur Lasermarkierung bei.

Nicht nur Polymere mit linearen Kettenmolekülen, auch verzweigte oder leicht vernetzte Polymere können in der Matrix eingesetzt werden. Die Polymerisationsgrade der erfindungsgemäß einsetzbaren teilkristallinen Thermoplasten sind nicht besonders eingeschränkt und liegen in der gleichen Größenordnung wie die vergleichbarer nicht-lichtbeschriftbarer Formmassen.

Die erfindungsgemäß eingesetzte Matrixkomponente (A) muß teilkristallin sein, d.h. die in Frage kommenden Thermoplasten zeigen im DSC-Diagramm einen Schmelzbereich.

Die erfindungsgemäß eingesetzte Matrixkomponente (A) ist keinen besonderen Beschränkungen unterworfen, solange es sich um ein thermoplastisches und teilkristallines Polymeres handelt.

Beispiele für bevorzugt einsetzbare teilkristalline Thermoplasten (A) sind Polyacetale (A1), Polyester (A2), Polyamide (A3), Polyarylenether und Polyarylensulfide (A4), Polyethersulfone und Polysulfone (A5), Polyaryletherketone (A6), Polyolefine (A7), flüssig-kristalline Polymere (A8) sowie gegebenenfalls weitere thermoplastische Polymere als Blendpartner (AX).

Polyacetale (A1) im Sinne dieser Beschreibung sind Polymere, die als Hauptwiederholeit Oxymethylen-Gruppen ($CH_2O$-) aufweisen. Sie umfassen hierbei Polyoxymethylen-Homopolymere, -Copolymere, -Terpolymere und -Blockcopolymere.

Polyester (A2) im Sinne dieser Beschreibung sind thermoplastische Polymere mit sich wiederholenden Estergruppen in der Hauptkette. Beispiele sind Polykondensationsprodukte der Naphthalindicarbonsäuren, Terephthalsäure, Isophthalsäure, Adipinsäure, Azelainsäure, Sebacinsäure, Dodecandisäure, Cyclohexandicarbonsäuren, Mischungen dieser Carbonsäuren und esterbildenden Derivate mit zweiwertigen Alkoholen wie Ethylenglykol, 1,3-Propandiol, 1,4-Butandiol, 1,4-Butendiol und 1,6-Hexandiol, 1,4-Hexandiol, 1,4-Cyclohexandiol, 1,4-Di-(hydroxymethyl)cyclohexan, Bisphenol A, Neopentylglykol, Oligo- oder Polyethylenglykolen, Oligo- oder Polypropylenglykolen, Oligo- oder Poly(tetramethylen)glykolen, Mischungen dieser Diole sowie esterbildenden Derivate derselben sowie mit weiteren möglichen AA-, BB- und AB-Comonomeren.

Besonders bevorzugte Matrixkomponenten (A) sind Polyethylenterephthalat, Polybutylenterephthalat und Polyether-esterblockcopolymere.

Polyamide (A3) im Sinne dieser Beschreibung sind thermoplastische Polymere mit sich wiederholenden Säureamidgruppen in der Hauptkette. Sie umfassen sowohl Homopolymere des Amincarbonsäuretyps als auch des Diamin-Dicarbonsäuretyps als auch Copolymere mit weiteren möglichen AA-, BB- und AB-Comonomeren. Die verwendbaren Polyamide sind bekannt und zum Beispiel in der Encyclopedia of Polymer Science and Engineering, Vol. 11, S. 315 bis 489, John Wiley & Sons, Inc. 1988 beschrieben.

Beispiele für Polyamide (A3) sind Polyhexamethylenadipinsäureamid, Polyhexamethylenazelainsäureamid, Polyhexamethylensebacinsäureamid, Polyhexamethylendodekandisäureamid, Poly-11-aminoundekansäureamid und Bis-(p-amino-cyclohexyl)-methandodekansäurediamid oder die durch Ringöffnung von Lactamen, z.B. Polycaprolactam oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür sei ein Copolykondensat aus Terephthalsäure, Isophthalsäure, Hexamethylendiamin und Caprolactam genannt.

Polyarylensulfide (A4) im Sinne dieser Beschreibung sind thermoplastische Polymere mit sich wiederholenden Schwefelgruppen in der weitgehend aromatischen Hauptkette. Sie umfassen sowohl Homopolymere als auch Copolymere.

Flüssig-kristaffine Polymere (A8) im Sinne dieser Beschreibung sind insbesondere auf p-Hydroxybenzoesäure und/oder 6-Hydroxy-2-naphthoesäure basierende flüssigkristalline Copolyester und Copolyesteramide. Ganz besonders vorteilhaft als flüssigkristalline Kunststoffe einzusetzen sind im allgemeinen vollaromatische Polyester, die anisotrope Schmelzen bilden und mittlere Molekulargewichte (Mw=Gewichtsmittel) von 2.000 bis 200.000, bevorzugt von 3.500 bis 50.000 und insbesondere von 4.000 bis 30.000 g/mol aufweisen. Besonders geeignete flüssig-kristalline Polymere sind zum Beispiel in Saechtling, Kunststoff-Taschenbuch, Hanser-Verlag, 27. Ausgabe, auf den Seiten 517 bis 521 beschrieben.

Thermoplastische Polymere als Blendpartner (AX) im Sinne dieser Beschreibung können beliebige weitere teilkristalline, flüssigkristalline und amorphe Polymere sein.

Lichtsensitive Verbindungen (B) im Sinne dieser Beschreibung sind organische oder anorganische salzartige Verbindungen mit den oben definierten Kombinationen unterschiedlicher Kationen oder Mischungen aus salzartigen Verbindungen mit den oben definierten Kombinationen unterschiedlicher Kationen, die unter dem Einfluß einer Laserlichtquelle an der belichteten Stelle ihre Farbe ändern bzw. zu einer Farbänderung im Kunststoff führen.

Die Verbindungen (B) können klassische Salze mit definierter Stöchiometrie aus einem oder mehreren Anionen mit mehreren, mindestens jedoch zwei von unterschiedlichen Elementen abgeleitete Kationen sein, es kann sich aber auch um nicht stöchiometrisch zusammengesetzte Verbindungen handeln, die mindestens zwei von unterschiedlichen Elementen abgeleitete Kationen aufweisen.

Bei einem gegebenem System von Anionen ist das Auftreten einer Ionenaustauscherfunktionalität ein möglicher Nachweis, daß sich solch komplexe Strukturen unter Einbindung mehrerer unterschiedlicher Kationen ausbilden.

In einer möglichen Ausführungsform der Erfindung wird ein Gemisch an Verbindungen mit jeweils einem Kation eingesetzt, das beim Erwärmen zu wenigstens einer Verbindung mit zwei Kationen umsetzbar ist.

Die obige Definition des Erfindungsgedankens schließt unter anderem folgende Ausführungsformen ein, die alternativ oder in Kombination miteinander verwendet werden können. Die eine Ausführungsform besagt, dass die für die erfindungsgemäße Formmasse eingesetzten Additive als solche wenigstens zwei verschiedene Kationen besitzen, beispielsweise durch Umsetzung wenigstens zweier einfacher Salze (mit jeweils einem Kation) entstanden sind und als Mischsalze (B) in der Polymermatrix (A) die erfindungsgemäße Formmasse darstellen. Die andere Ausführungsform bedient sich der gleichen Auswahl an Kationen wie die erste Ausführungsform, besteht aber aus einem noch nicht miteinander umgesetzten Gemisch einfacher Salze. Diese Ausführungsform ist möglich, wenn bei erhöhten Temperaturen und sonstigen üblichen Bedingungen (z.B. Restfeuchte) die in der Mischung vorliegenden Salze zu Mischsalzen, also neuen Umsetzungsprodukten (B) reagieren, und somit die erfindungsgemäße Formmasse zugänglich wird.

Bei der letzteren Ausführungsform sind wiederum mehrere Varianten möglich. Die in dem Gemisch enthaltenen einfachen salzartigen Verbindungen können vor der Zugabe zu der Kunststoffmatrix (A) miteinander umgesetzt werden, um eine salzartige Verbindung mit Kationen nach den erfindungsgemäßen Auswahlregeln zu bilden, worauf das Umsetzungsprodukt als Additiv (B) für die erfindungsgemäße Formmasse benutzt werden kann. In einer weiteren Ausführungsform wird das Gemisch der einfachen Salze zu der laserbeschriftbar zu machenden Kunststoffmatrix (A) gemischt. Anschließend reagieren beim Erhitzen der Grundmasse die einfachen salzartigen Verbindungen miteinander und ergeben gleiche oder ähnliche Mehrfachsalze, die denen im ersten Teil dieses Beispiels gleichen oder wenigstens ähneln.

Elemente, deren Kationen sich zu lichtinduzierten Farbänderungen nutzen lassen, sind Ti, Cr, Mn, Fe, Co, Ni, Cu, Zn, Y, Zr, Nb, Mo, Ag, Sn, Sb, La, Pr, Ta, W und Ce.

Elemente, deren Kationen die genannten ergänzen, sind solche aus der 3.-6. Periode der II. und III. Hauptgruppe, der 5.-6. Periode der IV. Hauptgruppe sowie der 4.-5. Periode der III.-VIII. Nebengruppe des Periodensystems und die Lanthaniden.

Gegebenenfalls können noch als dritte Komponente Kationen von Elementen der 2.-5. Periode der 1. Hauptgruppe des Periodensystems vorhanden sein.

Bevorzugt sind solche Kombinationen, bei denen die unbelichtete Verbindung (B) im Bereich der verwendeten Lichtwellenlänge absorbiert.

Bevorzugt sind weiterhin solche Kombinationen, bei denen durch Variation der Molverhältnisse der Kationen die Eigenfarbe der unbelichteten Verbindung (B) eingestellt werden kann.

In einer Ausprägung der Erfindung weist die unbelichtete Formmasse eine beliebige Eigenfarbe und die belichtete Formmasse einen möglichst deutlichen farblichen Unterschied dazu auf. Wenn hier von einem farblichen Unterschied die Rede ist, kann dies ein Umschlagen von einem Farbton in einen anderen, wie beispielsweise von Gelb nach Rot, bedeuten. Im Sinne der Erfindung soll unter diesem Begriff aber auch eine Helligkeitsänderung, beispielsweise von weiss nach grau, von grau nach schwarz oder von hellbraun nach dunkelbraun, verstanden werden. Auch eine Änderung der Opazität, beispielsweise von transparent nach weiss oder schwarz oder braun, soll als farblicher Unterschied verstanden werden.

Der farbliche Unterschied kann vom menschlichen Auge wahrgenommen werden. Ebenfalls erfindungsgemäß sollen farbliche Unterschiede sein, so sie von optischen Messgeräten erfasst werden oder bei einer Wellenlänge außerhalb des Empfindlichkeitsbereiches des menschlichen Auges mittels eines Detektors wahrgenommen werden. Als Beispiel hierzu sei die Verwendung von Lesegeräten genannt, die Dioden-Laser im NIR-Bereich verwenden.

Für den Bereich des sichtbaren Lichtes bietet sich zur Beschreibung des farblichen Unterschiedes das CIELab-System an. Hier bedeutet ein hoher Farbkontrast das Auftreten eines hohen Wertes für dE*, wobei

$$dE^* = \sqrt[2]{(L^*_1-L^*_2)^2 + (a^*_1-a^*_2)^2 + (b^*_1-b^*_2)^2}$$

bedeutet; dabei steht Index 1 für die unbelichtete, Index 2 für die belichtete Formmasse.

Bei dem CIELab-System handelt es sich um ein von der Internationalen Beleuchtungskomission (Commission Internationale d'Eclairage) 1976 festgelegten Farbraum, wobei L* = Helligkeit, a* = Rot-Grün-Farbinformation, und b* = Gelb-Blau-Information bedeuten.

In einer bevorzugten Ausprägung der Erfindung weist die unbelichtete Formmasse eine möglichste hohe Helligkeit (also einen möglichst hohen Helligkeitswert L* im CIELab-Farbraum) und eine möglichst geringe Eigenfarbe (also eine möglichst geringe Abweichung von der schwarz weiss-Achse: betragsmäßig möglichst geringes a*, betragsmäßig möglichst geringes b*) auf. In diesem Fall soll die belichtete Formmasse eine möglichst geringe Helligkeit (möglichst niedriger Helligkeitswert L*) und dennoch eine möglichst geringe Eigenfarbe (betragsmäßig möglichst geringes a*, betragsmäßig möglichst geringes b*) aufweisen.

In einer anderen bevorzugten Ausprägung der Erfindung weist die unbelichtete Formmasse eine möglichst hohe Helligkeit (möglichst hoher Helligkeitswert L* im CIELab-Farbraum) und eine möglichst geringe Eigenfarbe (möglichst geringe Abweichung von der schwarz-weiss-Achse: betragsmäßig möglichst geringes a*, betragsmäßig möglichst geringes b*) auf. In diesem Fall soll die belichtete Formmasse eine möglichst deutliche Eigenfarbe (betragsmäßig möglichst hohes a* und/oder b*) aufweisen.

In der erfindungsgemäßen Zusammensetzung weisen die Anionen der Komponente (B) die allgemeine Formel $A_aO_o(OH)_y{}^{z-}$ auf, worin

A = drei- oder fünfwertiger Phosphor, vierwertiges Molybdän oder sechswertiges Wolfram bedeuten,

a, o und z unabhängig voneinander ganze Zahlen mit Werten von 1-20 bedeuten, und

y eine ganze Zahl mit Werten zwischen 0 und 10 ist.

In einer weiteren bevorzugten Ausführungsform der erfindungsgemäßen Zusammensetzung weist die Komponente (B) als Kationen mindestens eine Kombination aus zwei unterschiedlichen Elementen der Gruppe bestehend aus Kupfer, Zinn, Antimon und Eisen auf.

In einer besonders bevorzugten Ausführungsform der erfindungsgemäßen Zusammensetzung weist die Komponente (B) Anionen der Phosphor(V)- und/oder Phosphor(III)-säure, deren Kondensationsprodukte und gegebenenfalls weitere Hydroxidionen auf und als Kationen Cu und Fe oder Cu und Sn oder Cu und Sb oder Sn und Fe.

Neben der chemischen Zusammensetzung haben auch physikalische Parameter wie die Teilchengröße der Komponente (B) einen maßgeblichen Einfluß auf die Güte der Laserbeschriftbarkeit. Sie beeinflussen durch ihr Streuverhalten sowohl die Farb- und Helligkeitswerte der unbelichteten Matrix als auch die optische Einheitlichkeit im belichteten und unbelichteten Bereich. Weiterhin ist die mittlere Teilchengröße ein wichtiges Maß für die Dispergierbarkeit in der Polymermatrix und beeinflußt hierdurch auch die Lichtempfindlichkeit der Formmasse.

Als geeignet erweisen sich Komponenten (B) mit einem mittleren Teilchendurchmesser von weniger als 10 $\mu$m. Bevorzugt weist Komponente (B) einen mittleren Teilchendurchmesser unter 5 $\mu$m auf.

Quantitative Angaben zur Teilchengröße beziehen sich in dieser Anmeldung durchgehend auf die mittlere Teilchengröße ($d_{50}$) und auf die Teilchengröße der Primärteilchen. Der Teilchendurchmesser wird für die Zwecke dieser Erfindung bestimmt durch übliche Methoden wie Lichtstreuung (ggf. mit polarisiertem Licht), Mikroskopie bzw. Elektronenmikroskopie, zählende Flussmessungen an dünnen Spalten, Sedimentationsverfahren oder weiteren kommerziell erhältlichen Verfahren.

Die Komponenten B) werden vorteilhaft in Anteilen von 0,01 bis 2,0 Gew.-% eingesetzt. Besonders bevorzugt sind Gehalte von 0,02 bis 1,0 Gew.-%.

Lichtsensibilisierende anorganische Oxide (C) im Sinne dieser Beschreibung sind Oxide, die unter dem Einfluß der Lichtstrahlung die Bildung farbgebender Verbindungen fördern. Dies kann zum einen eine Änderung ihrer Eigenfarbe dieser Oxide sein oder aber ein katalytischer Beitrag, daß entsprechend absorbierende Verbindungen in ihrer räumlichen Nachbarschaft gebildet werden.

Unter dem Begriff Oxide sind im Rahmen dieser Beschreibung auch Verbindungen zu verstehen, bei denen ein Teil der Sauerstoffatome in der Form von Hydroxylgruppen vorliegt. Auch in diesem Falle kann es sich um stöchiometrisch und um nicht-stöchiometrisch zusammengesetzte Verbindungen handeln.

Geeignete anorganische Oxide der Komponente (C) können auf Elementen der 3.-6. Periode der III. und IV.

Hauptgruppe, 5.-6. Periode der V. Hauptgruppe sowie der 4.-5. Periode der III.-VIII. Nebengruppe des Periodensystems und der Lanthaniden basieren.

Bevorzugt eingesetzte Oxide (C) sind $Al_2O_3$, $SiO_2$, silikatische sowie alumosilikatische Mineralien, silikatische Gläser, $TiO_2$, ZnO, $ZrO_2$, $SnO_2$, $Sb_2O_3$, $Sb_2O_5$, $Bi_2O_3$ sowie ggf. Mischoxide mit weiteren dotierenden Elementen. Besonders bevorzugt ist $TiO_2$ in Anatas- und Rutilform.

Neben der chemischen Zusammensetzung haben auch physikalische Parameter wie die Teilchengröße der Komponente (C) einen maßgeblichen Einfluß auf die Güte der Laserbeschriftbarkeit. Wirkt das oxidische Additiv durch sein Streuverhalten als permanentes Weisspigment werden die Helligkeitswerte der unbelichteten wie belichteten Stellen erhöht und damit der Markierungskontrast limitiert. Weiterhin ist die mittlere Teilchengröße ein wichtiges Maß für die maximale Teilchen-Matrix-Grenzfläche, die bei guter Dispergierung zu erzielen ist und beeinflußt hierdurch auch die Lichtempfindlichkeit der Formmasse.

Als geeignet herausgestellt haben sich Komponenten (C) mit einem mittleren Teilchendurchmesser von weniger als 250 nm. Der Teilchendurchmesser wird für die Zwecke dieser Erfindung z.B. durch Elektronen- oder Röntgenstrahlmethoden bestimmt. Bevorzugt weist Komponente (C) einen mittleren Teilchendurchmesser kleiner gleich 200, insbesondere kleiner gleich 100 nm, besonders bevorzugt von 10 bis 100 nm auf. Die angegebenen Teilchengrößen beziehen sich auf die verwendeten Primärteilchen des Additivs. Je nach Qualität der Dispersion können sich in der Matrix Agglomerate dieser Primärteilchen bilden, die naturgemäß größere Durchmesser aufweisen können.

Die Komponenten C) werden vorteilhaft in Anteilen von 0,01 bis 2,0 Gew.-% eingesetzt. Besonders bevorzugt sind Gehalte von 0,02 bis 1,0 Gew.-%.

Ein optionaler Bestandteil der erfindungsgemäßen thermoplastischen Formmassen sind weitere übliche Additive (D).

Dazu zählen beispielsweise Stabilisatoren zur Verbesserung der Beständigkeit gegen Lichteinwirkung, UV-Strahlung und Bewitterung (D1), Stabilisatoren zur Verbesserung der thermischen und thermooxidativen Beständigkeit (D2), Stabilisatoren zur Verbesserung der hydrolytischen Beständigkeit (D3), Stabilisatoren zur Verbesserung der acidolytischen Beständigkeit (D4), Gleitmittel (D5), Entformungshilfen (D6), farbgebende Additive (D7), kristallisationsregulierende Substanzen und Nukleierungsmittel (D8), Flammschutzmittel (D9), Schlagzähmodifier (D10), Füllstoffe (D11), Weichmacher (D12) und ggf. weitere übliche Additive (D13).

Als Stabilisatoren bei Bewitterung und Licht und UV-Strahlung (D1) kann die erfindungsgemäße Formmasse eine oder mehrere Substanzen aus der Gruppe von (D1A) Benzotriazol-Derivaten, (D1B) Benzophenon-Derivaten, (D1C) Oxanilid-Derivaten, (D1D) aromatischen Benzoaten, wie Salicylaten, (D1E) Cyanacrylaten, (D1F) Resorcin-Derivaten und (D1G) sterisch gehinderten Aminen enthalten.

In einer bevorzugten Ausführungsform enthält die erfindungsgemäße Formmasse sowohl mindestens einen der Stabilisatoren der Gruppen D1A bis D1F als auch sterisch gehinderte Amine der Gruppe D1 G.

In einer besonders bevorzugten Ausführungsform enthält die erfindungsgemäße Formmasse ein Benzotriazol-Derivat D1A zusammen mit einem gehinderten Amin D1G.

Beispiele für (D1A) Benzotriazol-Derivate sind 2-[2'-Hydroxy-3',5'-bis(1,1-dimethylbenzyl)phenyl]-benzotriazol, 2-[2'-Hydroxy-3'-tert.-butyl-5'-methylphenyl)-5-chlorobenzotriazol, 2-(2'-Hydroxy-5'-methylphenzyl)-benzotriazol.

Beispiele für Benzophenonderivate (D1B) sind 2-Hydroxy-4-n-octoxybenzophenon und 2-Hydroxy-4-n-dodecyloxybenzophenon.

Beispiele für sterische gehinderte Amine (D1G) sind 2,2,6,6-Tetramethyl-4-piperidyl-Verbindungen, wie zum Beispiel Bis-(2,2,6,6-tetramethyl-4-piperidyl)-sebazat oder das Polymer aus Bernsteinsäuredimethylester und 1-(2-Hydroxyethyl)-4-hydroxy-2,2,6,6-tetramethyl-4-piperidin.

Die genannten Bewitterungsstabilisatoren (D1) werden vorteilhaft in Anteilen von 0,01 bis 2,0 Gew.-% eingesetzt. Besonders bevorzugt sind Gehalte von 0,02 bis 1,0 Gew.-% in Summe D1A bis D1G.

Als Stabilisatoren zur Verbesserung der thermischen und thermooxidativen Beständigkeit (D2) kann die erfindungsgemäße Formmasse Antioxidantien, wie zum Beispiel eine oder mehrere Substanzen aus der Gruppe von (D2A) sterisch gehinderten Phenolen, (D2B) Phenolethern, (D2C) Phenolestern organischen oder phosphorhaltigen Säuren enthalten, wie zum Beispiel Pentaerithrityl-tetrakis-[3-(3,5-di-tert.butyl-4-hydroxyphenyl)-proprionat], Triethylenglykol-bis-[3-[3-tert.butyl-4-hydroxy-5-methylphenyl)-proprionat], 3,3'-bis[3-(3,5-di-tert.butyl-4-hydroxyphenyl)-propionohydrazid), Hexamethylen-glykol-bis-[3-(3,5-di-tert.butyl-4-hydroxyphenyl)-propionat], 3,5-di-tert-butyl-4-hydroxytoluol, (D2D) Hydrochinone und (D2E) aromatische sekundäre Amine.

Bevorzugt sind Pentaerithrityl-tetrakis-[3-(3,5-di-tert.butyl-4-hydroxyphenyl)-proprionat], Hydrochinone (D2D) und aromatische sekundäre Amine (D2E).

In einer besonders bevorzugten Ausprägung wird ein sterisch gehindertes Phenol (D2B) zusammen mit einer Phosphorverbindung eingesetzt. Die genannten Antioxidantien (D2) können in Anteilen von 0,01 bis 10 Gew.-% eingesetzt werden. Bevorzugt sind Gehalte bis 2 Gew.-% in Summe.

Besonders bevorzugt ist die Kombination Ciba Irganox® 1010 mit Irgafos® 126.

Als Stabilisatoren zur Verbesserung der hydrolytischen Beständigkeit kann die erfindungsgemäße Formmasse Hydrolysestabilisatoren (D3), also eine oder mehrere Substanzen aus der Gruppe der (D3A) Glycidylether oder (D3B) Carbodiimide enthalten. Beispiele sind Mono-, Di- oder gegebenenfalls Mehrfachglycidylether von Ethylenglykol, Propandiol, 1,4-Butandiol, 1,3-Butandiol, Glycerin und Trimethylolpropantrisglycidylether. Die genannten Stabilisatoren (D3) können in Anteilen von 0 bis 3 Gew.-% eingesetzt werden. Bevorzugt sind Gehalte bis 1,0 Gew.-% in Summe. Besonders bevorzugt sind polymere oder monomere Carbodiimide.

Als Stabilisatoren zur Verbesserung der acidolytischen Beständigkeit (D4) kann die erfindungsgemäße Formmasse säureabstrahierende Substanzen, also eine oder mehrere Substanzen aus der Gruppe der stickstoffhaltigen Verbindungen (D4A), der Erdalkali-Verbindungen (D4B) oder der Basen (D4C) enthalten.

Enthält die Matrix Polyacetale oder ähnlich säurelabile Polymere werden in einer bevorzugten Ausführungsform sowohl stickstoffhaltige Verbindungen (D4A) als auch Erdalkaliverbindungen (D4B) eingesetzt.

Beispiele für stickstoffhaltige Verbindungen (D4A) sind Melamin, Melaminformaldehyd-Addukte und Methylolmelanin.

Beispiele für Erdalkali-Verbindungen (D4B) sind Calciumpropionat, Tricalciumcitrat und Magnesiumstearat.

Beispiele für Basen (D4C) sind $Na_2CO_3$ und $NaHCO_3$.

Die genannten Säurefänger (D4) werden bevorzugt in Anteilen von 0,001 bis 1,0 Gew.-% eingesetzt. Säurefänger können auch als Mischungen eingesetzt werden. Als Gleitmittel (D5) oder Entformungshilfen (D6) kann die erfindungsgemäße Formmasse Wachse, wie zum Beispiel Polyethylenwachse und/oder oxidierte Polyethylenwachse deren Ester und Amide sowie Fettsäureester bzw. Fettsäureamide enthalten.

Bevorzugt sind gemischte Ethylen-bis-fettsäureamide und Montanwachs-glyceride.

Gleitmittel (D5) und Entformungshilfen (D6) werden bevorzugt in Anteilen von 0,01 bis 10 Gew.-% eingesetzt. Besonders bevorzugt sind Gehalte von 0,05 bis 3 Gew.-% in Summe. Gleitmittel können in der Regel auch als Entformungshilfen wirken und umgekehrt.

Als farbgebende Additive (D7) kann die erfindungsgemäße Formmasse farbgebende Substanzen, sogenannte Farbmittel, enthalten. Diese können sowohl organische als auch anorganische Pigmente als auch Farbstoffe sein.

Die Pigmente und Farbstoffe sind nicht besonders limitiert. Allerdings sollten Pigmente eingesetzt werden, die sich gleichmäßig in der Formmasse verteilen und sich nicht an Grenzflächen oder einzelnen Domänen anreichern, so daß eine ausgezeichnete Farbgleichmäßigkeit, Farbkonstanz und mechanische Eigenschaften gewährleistet werden können.

Beispielhaft seien genannt Anthrachinon-Farbstoffe und verschiedene Pigmente wie Ruß, Azo-Pigmente, Phthalocyanin-Pigmente, Perylen-Pigmente, Chinacridon-Pigmente, Anthrachinon-Pigmente, Indolin-Pigmente, Titandioxid-Pigmente, Eisenoxid-Pigmente und Kobalt-Pigmente. Auch beliebige geeignete Kombinationen von farbgebenden Substanzen können innerhalb der vorliegenden Erfindung eingesetzt werden. Beim Einsatz von Kohlenstoff-Rußen wird neben der farbgebenden Wirkung oft auch ein Beitrag zur Witterungsstabilisierung beobachtet. Der Gehalt an farbgebenden Substanzen liegt bevorzugt bei 0,05 bis 10 Gew.- %, besonders bevorzugt bis 5 Gew.-% in Summe. Bei zu geringen Gehalten wird die gewünschte Farbtiefe oft nicht erreicht; höhere Gehalte sind meist nicht notwendig, ökonomisch nicht attraktiv und verschlechtern ggf. andere Eigenschaften wie die Mechanik der Formmasse.

Als kristallisationsregulierende Substanzen (D8) kann die erfindungsgemäße Formmasse homogen oder heterogen wirkende Nukleierungsmittel, also eine oder mehrere Substanzen aus der Gruppe von festen Anorganika und vernetzten Polymeren enthalten. Beispiele für (D8) Nukleierungsmittel sind pyrogenes Siliziumdioxid mit und ohne Oberflächenmodifikation, Calciumfluorid, Natriumphenylphosphinat, Aluminiumoxid, feinteiliges Polytetrafluorethylen, Valentinit, Pyrophyllit, Dolomit, Melamincyanurat, Borverbindungen, wie Bornitrid, Kieselsäure, Montmorillonit sowie organische modifizierter Montmorillonit, organische sowie anorganische Pigmente, Melamin-Formaldehydkondensate und Schichtsilikate.

In einer bevorzugten Ausführungsform enthält die erfindungsgemäße Formmasse Talkum oder verzweigte oder teilvernetzte Polymere als Nukleierungsmittel.

Nukleierungsmittel werden bevorzugt in Anteilen von 0,0001 bis 5 Gew.-% eingesetzt. Bevorzugt sind Gehalte von 0,001 bis 2,0 Gew.-% in Summe.

Weiterhin kann die erfindungsgemäße Formmasse Additive (D9) enthalten, die das Brandverhalten günstig beeinflussen. Es kommen alle bekannten Flammschutzmittel in Betracht, sowohl halogenhaltige als auch halogenfreie.

Bevorzugt sind Gehalte von 0 bis 30 Gew.-% in Summe.

Beispiele für Flammschutzmittel sind (D9A) stickstoffhaltige, (D9B) phosphor-haltige (in Oxidationsstufen des Phosphors von +5 bis -3), (D9C) Antimontrioxid (oft in Kombination mit halogenhaltigen Synergisten), (D9D) halogenhaltige Verbindungen sowie (D9E) halogenarme oder -freie Formulierungen.

Beispiele für D9A bzw. D9B sind Melaminpolyphosphat, Melamincyanurat, Resorcindiphosphat, Polyhalogendiphenyl, Polyhalogendiphenylether, Polyhalogenphthalsäure und ihre Derivate, Polyhalogenoligo- und -polycarbonate, substituierte Phosphine wie Triphenylphosphin, substituierte Phosphinoxide, Melaminphosphatester, Phosphinsäureester und entsprechende Salze, elementarer Phosphor, Hypophosphitester und entsprechende Salze, Phosphitester und entsprechende Salze, Phosphatester und entsprechende Salze.

Weiterhin kann die erfindungsgemäße Formmasse Additive (D10) enthalten, die als Schlagzähmodifizierer mechanische Eigenschaften günstig beeinflussen.

Bevorzugt sind Gehalte von 0 bis 20 Gew.-% in Summe.

Beispiele hierfür sind partikuläre Polymere, die oft kautschukelastisch sind bzw. kautschukelastische Komponenten enthalten.

Bevorzugte Arten von solchen Elastomeren sind die sog. Ethylen-Propylen (EPM) bzw. Ethylen-Propylen-Dien-(EPDM)-Kautschuke. EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbomene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt.

Bevorzugt werden Hexa-1,5-dien-5-Ethyliden-norbornen und Dicyclopentadien.

Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäure-derivate bzw. Epoxygruppen enthaltende Monomere werden vorzugsweise durch Zugabe von Dicarbonsäure- bzw. Epoxygruppen enthaltenden Monomeren in den Kautschuk eingebaut.

Bevorzugte Elastomere sind auch Emulsionspolymerisate, deren Herstellung z.B. von Blackley in der Monographie "Emulsion Polymerization" beschrieben wird. Die verwendbaren Emulgatoren und Katalystoren sind an sich bekannt. Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst. Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden. Die Weich- oder Kautschukphase (mit einer Glasübergangstemperatur von unter 0°C) der Elastomeren kann den Kern, die äussere Hülle oder eine mittlere Schale (bei Elastomeren mit mehr als zweischaligem Aufbau) darstellen; bei mehrschaligen Elastomeren können auch mehrere Schalen aus einer Kautschukphase bestehen. Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, alpha -Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschliessend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomere.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat / (Meth)-acrylsäure-Copolymere, n-Butylacrylat/Glycidylacrylat- oder n-Butylacrylat / Glycidylmethacrylat-Copolymere, Pfropfpolymerisate mit einem inneren Kern aus n-Butylacrylat oder auf Butadienbasis und einer äusseren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Weitere bevorzugte Kautschuke sind Polyurethane, Polyetherester und Siliconkautschuke.

Selbstverständlich können auch Mischungen der vorstehend aufgeführten Kautschuktypen eingesetzt werden.

Als Füll- und Verstärkungsmittel (D11) können die erfindungsgemässen thermoplastischen Formmassen faser- , plättchen- oder teilchenförmige Füllstoffe und Verstärkungsmittel enthalten.

Beispiele sind Kohlenstofffasern, Aramidfasern, Glasfasern, Glaskugeln, amorphe Kieselsäure, Asbest, Calciumsilicat (Wollastonit), Aluminiumsilicat, Magnesiumcarbonat, Kaolin, Kreide, Kalk, Marmor, gepulverter Quarz, Glimmer, Schwerspat, Feldspat, Schicht- und Alumosilikate, Bentonit, Montmorillonit und Talk.

Die Füllstoffe können durch organische Komponenten oder Silanisierung modifiziert sein. Der Anteil derartiger Füllstoffe beträgt im allgemeinen bis zu 50 Gew.-%, bevorzugt bis zu 35 Gew.-%.

Weiterhin kann die erfindungsgemäße Formmasse Additive (D12) enthalten, welche die Mobilität der Kette in den amorphen Phasen beeinflussen oder die Glastemperatur senken oder anderweitig als Weichmacher wirken.

Beispiele sind Phthalsäuredioctylester, Phthalsäuredibenzylester, Phthalsäurebutylbenzylester, Kohlenwasserstofföle, N-(n-Butyl)benzol-sulfonamid und o- und p-Tolylethylsulfonamid.

Als weitere Additive (D13) kann die erfindungsgemäße Formmasse Additive enthalten, die nach dem jeweiligen Stand der Technik funktionelle Eigenschaften der Formmasse (z.B. elektrische Leitfähigkeit und/oder Antistatikvermögen) gewährleisten oder verbessern.

Eine Herstellungsweise der erfindungsgemäßen Formmasse oder eines geeigneten Zwischenproduktes ist zum Beispiel das Mischen aller Bestandteile bei erhöhter Temperatur, d.h. oberhalb des Schmelzpunktes des, einiger oder aller Matrixpolymere (A) in gut mischenden Aggregaten wie z.B. Brabendem, Extrudern, vorzugsweise Zweischneckenextrudern, oder auf Mischwalzen.

Eine weitere Herstellungsweise ist das Mischen von Komponenten bei Raumtemperatur und das anschließende Aufschmelzen der Matrixpolymere in einem Extruder, vorzugsweise Zweischneckenextruder.

Eine weitere Herstellungsweise ist dann möglich, wenn die Matrix A ein Polymer enthält, das über eine Polykondensationsreaktion aufgebaut wird: In diesem Fall können Additive zur besseren Dispergierung bereits während des Molekulargewichtsaufbaus zugegeben werden. Vor allem für nano-skalige Additive C bietet diese Variante Vorteile. Enthält die Matrix einen Polyester, so können solche und andere Komponenten am Ende der Umesterung bzw. am Beginn der Polykondensation zugegeben werden.

Ebenfalls können die Komponenten einzeln oder in Kombination zunächst zu höher konzentrierten Masterbatchen verarbeitet werden und diese anschließend mit weiteren Komponenten zu der erfindungsgemäßen Mischung weiterverarbeitet werden.

Die im Rahmen dieser Beschreibung erwähnten Additive können in beliebigen geeigneten Schritten hinzugegeben werden. Die Endrezeptur der Formmasse kann auch so erzeugt werden, daß einzelne oder mehrere Additive erst kurz vor der Erzeugung des Formkörpers zugegeben werden. Auch die Mischung von Granulat mit einer Additivpaste oder die Mischung von zwei oder mehreren Sorten an Granulat, wobei mindestens eines der erfindungsgemäßen Formmasse entspricht oder sie letztendlich zusammen die erfindungsgemäße Zusammensetzung ergeben, sind geeignet.

Die erfindungsgemäße Formmasse ist thermoplastisch und damit den üblichen Verarbeitungsweisen zugänglich.

Die Verarbeitung erfolgt üblicherweise durch Einsatz eines Granulats, das in bekannter Weise, z.B. durch Extrusion, Spritzguss, Vakuumformen, Blasformen oder Schäumen zu Formkörpern weiterverarbeitet wird.

Die erfindungsgemäße Formmasse eignet sich als technischer Werkstoff zur Herstellung von Halbzeug und Fertigteilen. Auch Formteile in bestrahlter und unbestrahlter Form, die aus der erfindungsgemäßen Formmasse mittels üblicher Verarbeitungstechniken, insbesondere durch Spritzguß, hergestellt werden, sind Gegenstand der vorliegenden Erfindung.

Die erfindungsgemäßen Formteile können in der Computer-, Elektro-, Elektronik-, Haushaltswaren- und Kraftfahrzeugindustrie Anwendung finden.

Die Kennzeichnung und Beschriftung von erfindungsgemäßen Formteilen z.B. Tastaturen, Kabeln, Leitungen, Zierleisten bzw. Funktionsteilen im Heizungs-, Lüftungs- und Kühlbereich oder Schalter, Stecker, Hebel und Griffe, die erfindungsgemäße Formmasse enthalten, kann mit Hilfe von Laserlicht erzielt werden.

Weiterhin können die erfindungsgemäßen Formteile als Verpackungen eingesetzt werden.

Gegenstand der vorliegenden Erfindung ist weiterhin ein Verfahren zur Lasermarkierung von thermoplastischen Formteilen umfassend die Schritte:

> i) Herstellen eines Formteils aus einer Formmasse enthaltend mindestens einen teilkristallinen Thermoplasten A) und Komponenten B) und gegebenenfalls und/oder D) wie oben definiert, und
> ii) Bestrahlen vorbestimmter Teile mindestens einer Oberfläche des Formteils mit Laserlicht um an den bestrahlten Stellen eine Änderung des optischen Erscheinungsbildes zu bewirken.

Gegenstand der vorliegenden Erfindung ist ebenfalls die Verwendung der oben definierten Komponenten B) und gegebenenfalls C) zur Lasermarkierung von Formteilen.

Die damit erhaltenen Markierungen zeichnen sich dadurch aus, daß sie wisch- und kratzfest, stabil bei nachträglichen Sterilisationsprozessen und hygienisch rein beim Markierungsprozeß aufbringbar sind.

Ein weiteres Anwendungsgebiet für die Laserbeschriftung sind Kunststoffmarken zur individuellen Kennzeichnung von Tieren, sogenannte Geflügelringe, Cattle Tags oder Ohrmarken. Die Beschriftung muß sehr dauerhaft werden, da die Marke teilweise über mehrere Jahre an den Tieren verbleiben.

Die Erfindung wird durch die nachstehenden Beispiele erläutert. Eine Begrenzung ist dadurch nicht beabsichtigt.

Beispiele

Es wurden Proben hergestellt und untersucht, die als teilkristallinen technischen Thermoplasten (A) Polyoxymethylen (POM) oder die Polybutylenterephthalat (PBT) enthielten.

Die erfindungsgemäßen Beispiele enthielten neben der Komponente A entweder lichtsensitive Verbindungen mit mehreren Kationen (B) oder nanoskalige Teilchen von lichtsensibilisierenden Oxiden (C) oder eine Kombination aus beidem. Dagegen enthielten die als Vergleichsbeispiele herangezogenen Proben entweder lichtsensitive Verbindungen mit einem Kation oder mikroskalige Teilchen von lichtsensibilisterenden Oxiden oder dienten als Referenz ohne lichtempfindliches Additiv.

In der nachfolgenden Tabelle sind die Probenzusammensetzungen aufgeführt.

Enthielt das Beispiel als Komponente A den Eintrag POM, so wurde als Matrix Polyoxymethylen Hostaform® C9021 (Ticona GmbH) verwendet.

Als übliche Additive $D_{POM}$ wurden als Antioxidans Irganox® 1010 (Ciba), als Lichtstabilisatoren Tinuvin® 234 und Tinuvin® 770 (jeweils Ciba Spezialitätenchemie GmbH), als Fließhilfsmittel und Entformhilfe Licowachs® C (Clariant GmbH), als Säureabstraktoren Melamin und Calciumpropionat eingesetzt.

Enthielt das Beispiel als Komponente A den Eintrag PBT, so wurde als Matrix PBT Celanex® 2003 (Ticona GmbH) verwendet.

Als übliche Additive $D_{PBT}$ wurden als Antioxidans Irganox® 1010 und Irgafos® 126 (jeweils Ciba Spezialitätenchemie GmbH), als Nukleierungsmittel Talkum, als Fließhilfsmittel und Entformhilfe Licolub® WD4 (Clariant GmbH) und als Feuchtigkeits-abstraktoren Stabaxol® (Rheinchemie Rheinau GmbH) eingesetzt.

Enthielt das Beispiel als Komponente B den Eintrag CuOHP so wurde Kupfer(II)hydroxidphosphat bezogen von Fa. Aldrich bzw. Fa. Chemische Fabrik Budenheim KG eingesetzt.

Enthielt das Beispiel als Komponente B den Eintrag FeP, so wurde ein Additivpulver eingesetzt, das sowohl Fe(II) als auch Fe(III) als Kationen enthält. Es wurde als Eisen(II)phosphit mit geringen Mengen Eisen(III) und geringen Mengen Phosphat von Fa. Chemische Fabrik Budenheim KG bezogen und eingesetzt.

Enthielt das Beispiel als Komponente B den Eintrag CuFeP so wurden Additivpulver eingesetzt, die sowohl Cu(II) als auch Fe(II) und Fe(III) als Kationen enthalten und von Fa. Chemische Fabrik Budenheim KG bezogen wurden. Die Additive wurden sowohl als unumgesetzte Mischung der Einzelsalze (ca. 50% Kupfer(II)hydroxidphosphat mit ca. 50% Eisenphosphit) als auch als umgesetzte Mischsalze zur Herstellung der Formmassen eingesetzt. Mit Röntgenstrahlung erhaltene Beugungsspektren an der Formmasse wiesen deutliche Unterschiede zu denen der einfachen Ausgangssalze auf.

Enthielt das Beispiel als Komponente B den Eintrag SnCuP, so wurden Additivpulver eingesetzt, die sowohl Sn(II) als auch Cu(II) als Kationen enthalten und von Fa. Chemische Fabrik Budenheim KG bezogen wurden. Die Additive wurden sowohl als unumgesetzte Mischung der Einzelsalze (ca. 80% Zinn(II)phosphat mit ca. 20% Kupfer(II)hydroxidphosphat) als auch als umgesetzte Mischsalze zur Herstellung der Formmassen eingesetzt. Mit Röntgenstrahlung erhaltene Beugungsspektren an der Formmasse wiesen deutliche Unterschiede zu denen der einfachen Ausgangssalze auf.

Enthielt das Beispiel als Komponente B den Eintrag CuSbP so wurde ein Additivpulver eingesetzt, das sowohl Cu(II) als auch Sb(III) als Kationen enthielt und von Fa. Chemische Fabrik Budenheim KG bezogen wurde. Die Additive wurden als unumgesetzte Mischung der Einzelsalze (ca. 80% Antimon(III)phosphat mit ca. 20% Kupfer(II)hydroxidphosphat) zur Herstellung der Formmassen eingesetzt. Mit Röntgenstrahlung erhaltene Beugungsspektren an der Formmasse wiesen deutliche Unterschiede zu denen der einfachen Ausgangssalze auf.

Enthielt das Beispiel als Komponente C den Eintrag nano-TiO$_2$ (n-TiO$_2$), so wurden Titandioxide mit Teilchendurchmessern von wenigen Nanometern, wie P25 der Fa. Degussa oder Hombitec RM130F der Fa. Sachtleben eingesetzt.

Durch Einarbeitung unter hoher Scherung und in ein relativ niedrig-molekulares Präpolymer wurde angestrebt, diese Additive nanoteilig einzuarbeiten und größere Agglomerate weitgehend zu vermeiden.

Enthielt das Vergleichsbeispiel als Komponente D7 den Eintrag $\mu$-TiO$_2$, so wurde 1 % Titandioxid-Weisspigment mit d$_{50}$ von 0,3 $\mu$m wie die Typen 2078 oder 2220 der Fa. Kronos eingesetzt.

Die Formmassen wurden in einem Doppelschneckenextruder mit zwei Knetzonen (Berstorff ZE-25) compoundiert. Bei Formmassen, die nano-TiO$_2$ enthalten, wurden die nano-Additive bereits während der Polykondensation zugesetzt.

Die Formmassen wurden anschließend zu 90mm x 65mm x 1 mm-Platten spritzgegossen.

Zur Laserbeschriftung wurde ein DPL Magic Marker der Fa. ACI Laser GmbH (Sömmerda, Thüringen) eingesetzt und die Beschriftungsparameter wie folgt variiert:

Es wurden Pumpintensitäten von 40 bis 90%, Pulsfrequenzen von 1 bis 6 kHz variiert und hierbei horizontale Vorschubgeschwindigkeit und vertikaler Zeilenversatz so gewählt, dass kubische Muster von 40, 50 und 75 $\mu$m realisiert wurden.

Zur Bestimmung der optischen Eigenschaften der Matrix und Markierungen wurde eine auf einem Mikroskop BX51 der Fa. Olympus montierte Digitalkamera Colorview II nebst Bildauswertungssoftware analySIS Pro der Fa. Soft Imaging Systems verwendet.

Zur Bestimmung der Helligkeits- und Dunkelheitswerte (entlang der weiss-schwarz-L\*-Achse) wurde unter maximalem Auflicht ein Mikroskopbild augenommen, dieses in ein Grauwertbild überführt und über den aufgenommenen Bereich gemittelt. Mit diesem Verfahren wurden digitale quantitative Daten von 0 für "schwarz" bis 255 für "weiss" erhalten. Die Aufnahmen wurden für alle Proben unter identischen. Beleuchtungsbedingungen durchgeführt. Die Matrix und die Lasermarkierungen wurden jeweils separat aufgenommen und ausgewertet.

Zur Bestimmung der Farbwerte wurde unter maximalem Auflicht ein Mikroskopbild aufgenommen, dieses über den aufgenommenen Bereich gemittelt und die Rot-, Grün-, und Blau-Anteile ausgelesen. Mit diesem Verfahren wurden digitale quantitative Daten von 0 bis 255 für die Anteile der drei Grundfarben erhalten. Die Aufnahmen wurden für alle Proben unter identischen Beleuchtungsbedingungen durchgeführt. Die Matrix und die Lasermarkierungen wurden jeweils separat aufgenommen und ausgewertet.

Die Ergebnisse liegen der Zusammenstellung der Tabelle zugrunde.

Wurde das Beispiel in der Spalte Lichtempfindlichkeit mit "gut" (+) bewertet, so wurden bereits in Markierungsfeldem mit Pumpintensitäten kleiner gleich 50% und Pulsfrequenzen größer als 4 kHz ausreichende Kontraste erzielt.

Wurde das Beispiel in der Spalte Lichtempfindlichkeit mit "ungenügend" (-) bewertet, so wurden in Markierungsfeldern mit Pumpintensitäten kleiner gleich 50% und Pulsfrequenzen größer als 4 kHz keine ausreichenden Kontraste erzielt.

Wurde das Beispiel in der Spalte Lichtempfindlichkeit mit "mittelmäßig" (0) bewertet, so lagen die Ergebnisse dazwischen.

Wurde das Beispiel in der Spalte Matrixhelligkeit mit "gut" (+) bewertet, so wies die PBT-Matrix Helligkeitswerte größer 222 bzw. die POM-Matrix größer als 220 auf.

Wurde das Beispiel in der Spalte Matrixhelligkeit mit "ungenügend" (-) bewertet, so wies die PBT-Matrix Helligkeitswerte kleiner 220 bzw. die POM-Matrix kleiner 216 auf.

Wurde das Beispiel in der Spalte Matrixhelligkeit mit "mittelmäßig" (0) bewertet, so lagen die Ergebnisse dazwischen.

Wurde das Beispiel in der Spalte Matrixfarbe mit "weiss", "hell" oder "hellgrau" bewertet, so waren die Rot-Grün-Blau-Anteile weitgehend gleich, bei "türkis" waren etwas stärkere Intensitäten im Grün-Blau-Bereich zu verzeichnen, bei "rötlich" waren etwas stärkere Intensitäten in Rot zu verzeichnen.

Wurde das Beispiel in der Spalte Markierungsdunkelheit mit "gut" (+) bewertet, so wies die Markierung Dunkelheitswerte (=255-Helligkeit) größer 80 auf.

Wurde das Beispiel in der Spalte Markierungsdunkelheit mit "ungenügend" (-) bewertet, so wies die Markierung Dunkelheitswerte kleiner 50 auf.

Wurde das Beispiel in der Spalte Markierungsdunkelheit mit "mittelmäßig" (0) bewertet, so lagen die Ergebnisse dazwischen.

Wurde das Beispiel in der Spalte Markierungsfarbe mit "schwarz", "anthrazit" oder "schwarz-grau" bewertet, so waren die Rot-Grün-Blau-Anteile weitgehend gleich, bei "schwarz-braun" waren etwas stärkere Intensitäten im Rot-Grün- oder Rot-Blau-Bereich zu verzeichnen, bei "scharz-rot" waren etwas stärkere Intensitäten in Rot zu verzeichnen.

Wurde das Beispiel in der Spalte Kontrast mit "gut" (+) bewertet, so wies das Verhältnis von Matrixhelligkeit/ Markierungshelligkeit einen Wert größer 1,25 auf.

Wurde das Beispiel in der Spalte Kontrast mit "ungenügend" (-) bewertet, so wies das Verhältnis von Matrixhelligkeit/Markierungshelligkeit einen kleineren Wert auf.

Wurde das Beispiel in der Spalte Markierungstopologie mit "gut" (+) bewertet, so wiesen die markierten Stellen keine fühlbare lokale Erhöhung der Rauhigkeit (weder Krater als Einfallstellen noch aufgeschäumte Erhöhungen) auf.

Wurde das Beispiel in der Spalte Markierungstopologie mit "ungenügend" (-) bewertet, so wiesen die markierten Stellen deutlich fühlbare lokale Erhöhung der Rauhigkeit (weder Krater als Einfallstellen noch aufgeschäumte Erhöhungen) auf. Wurde das Beispiel in der Sparte Markierungstopologie mit "mittelmäßig" (0) bewertet, so lagen die Ergebnisse dazwischen.

Der Tabelle ist zu entnehmen, daß die erfindungsgemäßen Formmassen keine ungenügende Bewertungen der Laserbeschriftung aufweisen, während bei den Vergleichsbeispielen durchgängig mindestens ein Kriterium als ungenügend eingestuft wurde.

Vergleichsbeispiele sind mit "V" gekennzeichnet; erfindungsgemäße Beispiele durch Angabe eines Zahlenwertes.

## Tabelle:

| | Komp.(A) (Gew%) | A | Komp.(B) (Gew%) | B | | Komp.(C) (Gew%) | C | Komp. (D) (Gew%) | D7 | D | Licht-empfindlich keit | Matrix-helligkeit | Matrix-farbe | Markierungs-dunkelheit | Markierungs-farbe | Kontrast | Topologie |
|---|---|---|---|---|---|---|---|---|---|---|---|---|---|---|---|---|---|
| V1 | 98,55 | POM | 0 | - | | 0 | - | 1,45 | - | $D_{POM}$ | - | 0 | hell | keine | keine | - | 0 |
| V2 | 98,35 | POM | 0,5 | CuOHP | | 0 | - | 1,45 | - | $D_{POM}$ | + | - | türkis | + | schwarz | + | 0 |
| V3 | 97,55 | POM | 0 | - | | 0 | - | 2,45 | µ-TiO2 | $D_{POM}$ | - | + | weiss | - | hell | - | 0 |
| V4 | 98,15 | PBT | 0 | - | | 0 | - | 0,85 | - | $D_{PBT}$ | - | 0 | hell | 0 | anthrazit | + | - |
| V5 | 98,95 | PBT | 0,2 | CuOHP | | 0 | - | 0,85 | - | $D_{PBT}$ | + | - | türkis | + | schwarz | + | + |
| V6 | 98,95 | PBT | 0,2 | FeP | | 0 | - | 0,85 | - | $D_{PBT}$ | + | - | rötlich | + | schwarz-rot | + | - |
| V7 | 98,15 | PBT | 0 | - | | 0 | - | 1,85 | µ-TiO2 | $D_{PBT}$ | 0 | + | weiss | - | grau | - | - |
| 8 | 98,35 | POM | 0,5 | CuFeP | Mischung | 0 | - | 1,45 | - | $D_{POM}$ | + | 0 | hellgrau | + | schwarz-braun | + | 0 |
| 9 | 98,35 | POM | 0,5 | CuFeP | Mischsalz | 0 | - | 1,45 | - | $D_{POM}$ | + | 0 | hellgrau | + | schwarz-braun | + | 0 |
| 10 | 98,35 | POM | 0,5 | SnCuP | Mischung | 0 | - | 1,45 | - | $D_{POM}$ | + | + | hell | + | schwarz-grau | + | 0 |
| 11 | 98,35 | POM | 0,5 | SnCuP | Mischsalz | 0 | - | 1,45 | - | $D_{POM}$ | + | + | hellgrau | + | schwarz-grau | + | 0 |
| 12 | 98,35 | POM | 0,5 | CuSbP | | 0 | - | 1,45 | - | $D_{POM}$ | + | + | hell | + | schwarz-grau | + | 0 |
| 13 | 97,35 | POM | 0,5 | CuFeP | Mischung | 0 | - | 2,45 | µ-TiO2 | $D_{POM}$ | 0 | + | weiss | 0 | schwarz-braun | + | 0 |
| 14 | 97,35 | POM | 0,5 | CuFeP | Mischsalz | 0 | - | 2,45 | µ-TiO2 | $D_{POM}$ | 0 | + | weiss | 0 | schwarz-braun | + | 0 |
| 15 | 97,35 | POM | 0,5 | SnCuP | Mischung | 0 | - | 2,45 | µ-TiO2 | $D_{POM}$ | 0 | + | weiss | 0 | schwarz-grau | + | 0 |
| 16 | 97,35 | POM | 0,5 | SnCuP | Mischsalz | 0 | - | 2,45 | µ-TiO2 | $D_{POM}$ | 0 | + | weiss | 0 | schwarz-grau | + | 0 |
| 17 | 97,35 | POM | 0,5 | CuSbP | | 0 | - | 2,45 | µ-TiO2 | $D_{POM}$ | 0 | + | weiss | 0 | schwarz-grau | + | 0 |
| 18 | 98,95 | PBT | 0,2 | CuFeP | Mischung | 0 | - | 0,85 | - | $D_{PBT}$ | + | 0 | hellgrau | + | schwarz-braun | + | + |
| 19 | 98,95 | PBT | 0,2 | CuFeP | Mischsalz | 0 | - | 0,85 | - | $D_{PBT}$ | + | 0 | hellgrau | + | schwarz | + | + |
| 20 | 98,95 | PBT | 0,2 | SnCuP | Mischung | 0 | - | 0,85 | - | $D_{PBT}$ | 0 | 0 | hell | + | schwarz-grau | + | + |
| 21 | 98,95 | PBT | 0,2 | SnCuP | Mischsalz | 0 | - | 0,85 | - | $D_{PBT}$ | 0 | 0 | hell | + | schwarz-grau | + | + |
| 22 | 98,95 | PBT | 0,2 | CuSbP | | 0 | - | 0,85 | - | $D_{PBT}$ | 0 | 0 | hell | + | schwarz-grau | + | 0 |
| 23 | 98,75 | PBT | 0,2 | CuFeP | | 0,2 | n-TiO2 | 0,85 | - | $D_{PBT}$ | + | + | hellgrau | + | schwarz-braun | + | + |
| 24 | 98,75 | PBT | 0,2 | SnCuP | | 0,2 | n-TiO2 | 0,85 | - | $D_{PBT}$ | + | + | hell | + | schwarz | + | + |
| 25 | 98,75 | PBT | 0,2 | SnCuP | | 0,2 | n-TiO2 | 0,85 | - | $D_{PBT}$ | + | + | hell | + | schwarz | + | 0 |
| 26 | 98,95 | PBT | 0 | - | | 0,2 | n-TiO2 | 0,85 | - | $D_{PBT}$ | 0 | + | hell | + | schwarz | + | 0 |
| 27 | 97,95 | PBT | 0,2 | CuFeP | Mischung | 0 | - | 1,85 | µ-TiO2 | $D_{PBT}$ | + | + | weiss | + | schwarz | + | 0 |
| 28 | 97,95 | PBT | 0,2 | CuFeP | Mischsalz | 0 | - | 1,85 | µ-TiO2 | $D_{PBT}$ | + | + | weiss | + | schwarz | + | 0 |
| 29 | 497,95 | PBT | 0,2 | SnCuP | Mischung | 0 | - | 1,85 | µ-TiO2 | $D_{PBT}$ | + | + | weiss | + | schwarz | + | + |

| | Komp.(A) (Gew%) | A | Komp.(B) (Gew%) | B | | Komp.(C) (Gew%) | C | Komp. (D) (Gew%) | D7 | D | Licht-empfindlichkeit | Matrix-helligkeit | Matrix-farbe | Markierungs-dunkelheit | Markierungs-farbe | Kontrast | Topologie |
|---|---|---|---|---|---|---|---|---|---|---|---|---|---|---|---|---|---|
| 30 | 97,95 | PBT | 0,2 | SnCuP | Mischsalz | 0 | - | 1,85 | µ-TiO2 | $D_{PBT}$ | + | + | weiss | + | schwarz | + | + |
| 31* | 97,95 | PBT | 0,2 | CuSbP | | 0 | - | 1,85 | µ-TiO2 | $D_{PBT}$ | + | + | weiss | + | schwarz | + | 0 |
| 32* | 97,75 | PBT | 0,2 | CuFeP | Mischung | 0,2 | n-TiO2 | 1,85 | µ-TiO2 | $D_{PBT}$ | + | + | weiss | + | schwarz | + | + |
| 33 | 97,75 | PBT | 0,2 | CuFeP | Mischsalz | 0,2 | n-TiO2 | 1,85 | µ-TiO2 | $D_{PBT}$ | + | + | weiss | + | schwarz | + | + |
| 34* | 97,75 | PBT | 0,2 | SnCuP | Mischung | 0,2 | n-TiO2 | 1,85 | µ-TiO2 | $D_{PBT}$ | + | + | weiss | + | schwarz | + | + |
| 35 | 97,75 | PBT | 0,2 | SnCuP | Mischsalz | 0,2 | n-TiO2 | 1,85 | µ-TiO2 | $D_{PBT}$ | + | + | weiss | + | schwarz | + | + |
| 36* | 97,75 | PBT | 0,2 | CuSbP | | 0,2 | n-TiO2 | 1,85 | µ-TiO2 | $D_{PBT}$ | + | + | weiss | + | schwarz | + | 0 |
| 37* | 97,75 | PBT | 0,2 | - | | 0,2 | n-TiO2 | 1,85 | µ-TiO2 | $D_{PBT}$ | + | + | weiss | + | anthrazit | + | 0 |

*Vergleichsbeispiele

**EP 1 827 858 B1**

**Patentansprüche**

1. Lasermarkierbare Formmasse enthaltend

   A) mindestens einen teilkristallinen Thermoplasten, und
   B) mindestens eine partikuläre lichtsensitive Mischsalz-Verbindung, die unter dem Einfluß von Laserlicht ihre Farbe ändert oder zu einer Farbänderung im Kunststoff führt und die mehrere Kationen enthält, von denen eines ausgewählt wird aus der Gruppe bestehend aus Ti, Cr, Mn, Fe, Co, Ni, Cu, Zn, Y, Zr, Nb, Mo, Ag, Sn, Sb, La, Pr, Ta, W, Ce und von denen ein weiteres ausgewählt wird aus der Gruppe bestehend aus Elementen der 3.-6. Periode der II. und III. Hauptgruppe, der 5.-6. Periode der IV. Hauptgruppe sowie der 4.-5. Periode der III.-VIII. Nebengruppe des Periodensystems und der Lanthaniden, wobei die enthaltenen Kationen von mindestens zwei unterschiedlichen Elementen stammen und
   worin die Anionen die allgemeine Formel $A_aO_o(OH)_y^{z-}$ aufweisen, worin A = drei- oder fünfwertiger Phosphor, vier- oder sechswertiger Schwefel, vierwertiges Molybdän oder sechswertiges Wolfram bedeuten, a, o und z unabhängig voneinander ganze Zahlen mit Werten von 1-20 bedeuten, und y eine ganze Zahl mit Werten zwischen 0 und 10 ist und
   C) gegebenenfalls mindestens ein partikuläres anorganisches Oxid mit einem mittleren Teilchendurchmesser von weniger als 250 nm und
   D) gegebenenfalls weitere übliche Additive.

2. Lasermarkierbare Formmasse nach Anspruch 1, **dadurch gekennzeichnet, dass** die partikuläre lichtsensitive salzartige Komponente B) als Umsetzungsprodukt einfacher kationenhaltiger Verbindungen entstanden ist.

3. Lasermarkierbare Formmasse nach Anspruch 1 oder 2, **dadurch gekennzeichnet, dass** Komponente B) eine mittlere Teilchengröße ($d_{50}$) von kleiner als 10 $\mu$m aufweist.

4. Lasermarkierbare Formmasse nach einem oder mehreren der Ansprüche 1 bis 3, **dadurch gekennzeichnet, dass** Komponente B) neben zwei unterschiedlichen Kationen aus den Gruppen nach Anspruch 1 weitere Kationen aus Elementen der 2.-5. Periode der I. Hauptgruppe enthält.

5. Lasermarkierbare Formmasse nach einem oder mehreren der Ansprüche 1 bis 4, **dadurch gekennzeichnet, dass** der Gewichtsanteil von Komponente A) 50 bis 99,95%, bezogen auf die Gesamtmasse der Formmasse, beträgt.

6. Lasermarkierbare Formmasse nach einem oder mehreren der Ansprüche 1 bis 5, **dadurch gekennzeichnet, dass** Komponente A) ausgewählt wird aus der Gruppe bestehend aus Polyacetalen, Polyestern, Polyamiden, Polyarylenethern, Polyarylensulfiden, Polyethersulfonen, Polysulfone, Polyaryletherketonen, Polyolefinen, flüssig-kristallinen Polymeren und Kombinationen mit einem oder mehreren dieser Polymeren.

7. Lasermarkierbare Formmasse nach einem oder mehreren der Ansprüche 1 bis 6, **dadurch gekennzeichnet, dass** Komponente B) als Anionen anorganische Oxoanionen, Anionen von organischen Carbonsäuren oder Anionen der Kohlensäure aufweist.

8. Lasermarkierbare Formmasse nach Anspruch 7, **dadurch gekennzeichnet, dass** Komponente B) als Anionen phosphorhaltige Oxoanionen aufweist.

9. Lasermarkierbare Formmasse nach einem oder mehreren der Ansprüche 1 bis 8, **dadurch gekennzeichnet, dass** Komponente B) als Kationen eine Kombination aus zwei unterschiedlichen Elementen der Gruppe bestehend aus Kupfer, Zinn, Antimon und Eisen aufweist.

10. Lasermarkierbare Formmasse nach Anspruch 8, **dadurch gekennzeichnet, dass** Komponente B) als Anionen der Phosphor(V)- und/oder Phosphor(III)-säure, deren Kondensationsprodukte und gegebenenfalls weitere Hydroxidionen aufweist und als Kationen Cu und Fe, oder Cu und Sn, oder Cu und Sb, oder Sn und Fe.

11. Lasermarkierbare Formmasse nach einem oder mehreren der Ansprüche 1 bis 10, **dadurch gekennzeichnet, dass** in Komponente B) solche Kombinationen von Metallionen ausgewählt werden, bei denen die unbelichtete Komponente B) im Bereich der zu verwendenden Lichtwellenlänge absorbiert.

12. Lasermarkierbare Formmasse nach Anspruch 1, **dadurch gekennzeichnet, dass** Komponente C) einen mittleren

**16**

Teilchendurchmesser von weniger als 200 nm aufweist.

13. Lasermarkierbare Formmasse nach Anspruch 1, **dadurch gekennzeichnet, dass** Komponente C) einen von Komponente A) unterschiedlichen Brechungsindex aufweist.

14. Lasermarkierbare Formmasse nach einem oder mehreren der Ansprüche 2, 12 oder 13, **dadurch gekennzeichnet, dass** das anorganische Oxid ausgewählt wird aus der Gruppe der Oxide der Elemente der 3.-6. Periode der III. und IV, Hauptgruppe, der 5.-6, Periode der V. Hauptgruppe, der 4.-5. Periode der IIL-VIII. Nebengruppe und der Lanthaniden.

15. Lasermarkierbare Formmasse nach Anspruch 14, **dadurch gekennzeichnet, dass** das anorganische Oxid C) ausgewählt wird aus der Gruppe bestehend aus $Al_2O_3$, $SiO_2$, silikatischen sowie alumosilikatischen Mineralien, silikatischen Gläsern, $TiO_2$, ZnO, $ZrO_2$, $SnO_2$, $Sb_2O_3$, $Sb_2O_5$, $Bi_2O_3$, sowie deren Mischoxiden mit weiteren dotierenden Elementen.

16. Lasermarkierbare Formmasse nach Anspruch 15, **dadurch gekennzeichnet, dass** das anorganische Oxid C) $TiO_2$ in Anatas- und/oder Rutilform ist.

17. Lasermarkierbare Formmasse nach einem oder mehreren der Ansprüche 1 bis 16, **dadurch gekennzeichnet**, diese als Komponente D) mindestens eines der folgenden Zusätze enthält: Stabilisatoren zur Verbesserung der Beständigkeit gegen Lichteinwirkung, UV-Strahlung und Bewitterung, Stabilisatoren zur Verbesserung der thermischen und thermooxidativen Beständigkeit, Stabilisatoren zur Verbesserung der hydrolytischen Beständigkeit, Stabilisatoren zur Verbesserung der acidolytischen Beständigkeit, Gleitmittel, Entformungshilfen, farbgebende Additive, kristallisationsregulierende Substanzen und Nukleierungsmittel, Flammschutzmittel, Schlagzähmodifier, Füllstoffe und/oder Weichmacher.

18. Lasermarkierbare Formmasse nach Anspruch 17, **dadurch gekennzeichnet, dass** diese als Zusatz mindestens ein sterisch gehindertes Phenol zusammen mit einer Phosphorverbindung enthält.

19. Verfahren zur Lasermarkierung von thermoplastischen Formteilen umfassend die Schritte:

i) Herstellen eines Formteils aus einer Formmasse enthaltend mindestens einen teilkristallinen Thermoplasten A) und Komponenten B) und gegebenenfalls C) und/oder D) nach Anspruch 1 bis 18, und
ii) Bestrahlen vorbestimmter Teile mindestens einer Oberfläche des Formteils mit Laserlicht um an den bestrahlten Stellen eine Änderung des optischen Erscheinungsbildes zu bewirken.

20. Formteil erhältlich durch Formgebung einer lasermarkierbaren Formmasse nach einem oder mehreren der Ansprüche 1 bis 18.

21. Lasermarkiertes Formteil erhältlich durch Bestrahlen eines Formteils aus einer lasermarkierbaren Formmasse nach einem oder mehreren der Ansprüche 1 bis 18 mit Laserlicht.

22. Verwendung von partikulären lichtsensitiven Mischsalz-Verbindungen B) oder deren Mischungen, die unter dem Einfluss von Laserlicht ihre Farbe ändern bzw. zu einer Farbänderung im Kunststoff führen und die mehrere Kationen enthalten, von denen eines ausgewählt wird aus der Gruppe bestehend aus Ti, Cr, Mn, Fe, Co, Ni, Cu, Zn, Y, Zr, Nb, Mo, Ag, Sn, Sb, La, Pr, Ta, W, Ce und von denen ein weiteres ausgewählt wird aus der Gruppe bestehend aus Elementen der 3.-6. Periode der II. und III. Hauptgruppe, der 5.-6. Periode der IV. Hauptgruppe sowie der 4.-5. Periode der III.-VIII Nebengruppe und der Lanthaniden, wobei die enthaltenen Kationen von mindestens zwei unterschiedlichen Elementen stammen und worin die Anionen der allgemeinen Formel $A_aO_o(OH)_y^{z-}$ aufweist, worin A = drei- oder fünfwertiger Phosphor, vier- oder sechswertiger Schwefel, vierwertiges Molybdän oder sechswertiges Wolfram bedeuten, a, o und z unabhängig voneinander ganze Zahlen mit Werten von 1-20 bedeuten, und y eine ganze Zahl mit Werten zwischen 0 und 10 ist und gegebenenfalls von partikulären anorganischen Oxiden C) mit einem mittleren Teilchendurchmesser von weniger als 250 nm zur Lasermarkierung von Formteilen.

## Claims

1. A laser-markable molding composition containing:

A) at least one semicrystalline thermoplastic; and

B) at least one particulate light-sensitive mixed salt compound that changes its color or leads to a color change in the plastic material under the influence of laser light, and that contains several cations, one of which is selected from the group consisting of Ti, Cr, Mn, Fe, Co, Ni, Cu, Zn, Y, Zr, Nb, Mo, Ag, Sn, Sb, La, Pr, Ta, W, Ce; and of which another is selected from the group consisting of elements of periods 3-6 of main groups II and III, elements of periods 5-6 of main group IV, elements of periods 4-5 of transition groups III-VIII of the Periodic Table and the lanthanoids, wherein the cations contained are derived from at least two different elements; and wherein the anions have the general formula $A_aO_o(OH)_y^{z-}$, wherein A = trivalent or pentavalent phosphorus, tetravalent or hexavalent sulfur, tetravalent molybdenum or hexavalent tungsten; a, o, and z independently represent integers of 1 to 20; and y represents an integer of 0 to 10; and

C) optionally at least one particulate inorganic oxide having an average particle diameter of less than 250 nm; and

D) optionally further usual additives.

2. The laser-markable molding composition according to claim 1, **characterized in that** said particulate light-sensitive salt-like component B) has been obtained as a reaction product of simple cation-containing compounds.

3. The laser-markable molding composition according to claim 1 or 2, **characterized in that** component B has an average particle size ($d_{50}$) of less than 10 $\mu$m.

4. The laser-markable molding composition according to one or more of claims 1 to 3, **characterized in that** component B contains further cations from elements of periods 2-5 of main group I in addition to two different cations from the groups as defined in claim 1.

5. The laser-markable molding composition according to one or more of claims 1 to 4, **characterized in that** the weight proportion of component A) is from 50 to 99.95%, based on the total mass of the molding composition.

6. The laser-markable molding composition according to one or more of claims 1 to 5, **characterized in that** component A) is selected from the group consisting of polyacetals, polyesters, polyamides, polyarylene ethers, polyarylene sulfides, polyether sulfones, polysulfones, polyaryl ether ketones, polyolefins, liquid-crystalline polymers, and combinations with one or more of these polymers.

7. The laser-markable molding composition according to one or more of claims 1 to 6, **characterized in that** component B) comprises inorganic oxo anions, anions of organic carboxylic acids or anions of carbonic acid as anions.

8. The laser-markable molding composition according to claim 7, **characterized in that** component B) comprises phosphorus-containing oxo anions as anions.

9. The laser-markable molding composition according to one or more of claims 1 to 8, **characterized in that** component B) comprises a combination of two different elements of the group consisting of copper, tin, antimony and iron as cations.

10. The laser-markable molding composition according to claim 8, **characterized in that** component B) comprises anions of phosphoric and/or phosphorous acid, their condensation products and optionally further hydroxide ions as anions, and Cu and Fe or Cu and Sn or Cu and Sb or Sn and Fe as cations.

11. The laser-markable molding composition according to one or more of claims 1 to 10, **characterized in that** in component B) those combinations of metal ions are selected in which unexposed component B) absorbs in the range of the light wavelength to be used.

12. The laser-markable molding composition according to claim 1, **characterized in that** component C) has an average particle diameter of less than 200 nm.

13. The laser-markable molding composition according to claim 1, **characterized in that** component C) has a refractive index that is different from that of component A).

14. The laser-markable molding composition according to one or more of claims 2, 12 or 13, **characterized in that** said inorganic oxide is selected from the group of oxides of the elements of periods 3-6 of main groups III and IV, of periods 5-6 of main group V, of periods 4-5 of transition groups III-VIII, and of the lanthanoids.

**15.** The laser-markable molding composition according to claim 14, **characterized in that** said inorganic oxide (C) is selected from the group consisting of $Al_2O_3$, $SiO_2$, silicatic and aluminosilicatic minerals, silicatic glasses, $TiO_2$, ZnO, $ZrO_2$, $SnO_2$, $Sb_2O_3$, $Sb_2O_5$, $Bi_2O_3$, and mixed oxides thereof with further doping elements.

**16.** The laser-markable molding composition according to claim 15, **characterized in that** said inorganic oxide (C) is $TiO_2$ in the form of anatase and/or rutile.

**17.** The laser-markable molding composition according to one or more of claims 1 to 16, **characterized by** containing at least one of the following additives as component D): stabilizers for improving the resistance to light exposure, UV radiation and weathering, stabilizers for improving the thermal and thermo-oxidative resistance, stabilizers for improving the hydrolytic resistance, stabilizers for improving the acidolytic resistance, lubricants, demolding aids, colorant additives, crystallization-controlling substances and nucleating agents, flame retardants, impact modifiers, fillers and/or plasticizers.

**18.** The laser-markable molding composition according to claim 17, **characterized by** containing at least one sterically hindered phenol together with a phosphorus compound as additives.

**19.** A process for the laser marking of thermoplastic molded parts, comprising the steps of:

i) preparing a molded part from a molding composition containing at least one semicrystalline thermoplastic A) and components B) and optionally C) and/or D) according to claims 1 to 18; and
ii) irradiating predetermined parts of at least one surface of said molded part with laser light to cause a change of the optical appearance at the irradiated sites.

**20.** A molded part obtainable by molding a laser-markable molding composition according to one or more of claims 1 to 18.

**21.** A laser-marked molded part obtainable by irradiating with laser light a molded part consisting of a laser-markable molding composition according to one or more of claims 1 to 18.

**22.** Use of particulate light-sensitive mixed salt compounds B) or of mixtures thereof that change their color or lead to a color change in the plastic material under the influence of laser light, and that contain several cations, one of which is selected from the group consisting of Ti, Cr, Mn, Fe, Co, Ni, Cu, Zn, Y, Zr, Nb, Mo, Ag, Sn, Sb, La, Pr, Ta, W, Ce; and of which another is selected from the group consisting of elements of periods 3-6 of main groups II and III, elements of periods 5-6 of main group IV, elements of periods 4-5 of transition groups III-VIII of the Periodic Table and the lanthanoids, wherein the cations contained are derived from at least two different elements; and wherein the anions have the general formula $A_aO_o(OH)_y{}^{z-}$, wherein A = trivalent or pentavalent phosphorus, tetravalent or hexavalent sulfur, tetravalent molybdenum or hexavalent tungsten; a, o, and z independently represent integers of 1 to 20; and y represents an integer of 0 to 10; and optionally of particulate inorganic oxides C) having an average particle diameter of less than 250 nm; for the laser marking of molded parts.

## Revendications

**1.** Composition de moulage marquable au laser, contenant :

A) au moins un polymère thermoplastique semi-cristallin ; et
B) au moins un composé sel mixte particulaire photosensible qui change de couleur, ou provoque un changement de couleur dans la matière plastique, sous l'action de la lumière laser et qui contient plusieurs cations, dont l'un est choisi dans le groupe consistant en Ti, Cr, Mn, Fe, Co, Ni, Cu, Zn, Y, Zr, Nb, Mo, Ag, Sn, Sb, La, Pr, Ta, W, Ce, et dont un autre est choisi dans le groupe consistant en éléments des périodes 3 à 6 des groupes principaux II et III, des périodes 5 à 6 du groupe principal IV et des périodes 4 à 5 des sous-groupes III à VIII du tableau périodique et les lanthanides, les cations contenus étant dérivés d'au moins deux éléments différents ; et
les anions présentant la formule générale $A_aO_o(OH)_y{}^{z-}$, où A = phosphore trivalent ou pentavalent, soufre tétravalent ou hexavalent, molybdène tétravalent ou tungstène hexavalent, a, o et z sont indépendamment des nombres entiers de 1 à 20, et y est un nombre entier de 0 à 10 ; et
C) éventuellement au moins un oxyde inorganique particulaire avec un diamètre moyen des particules inférieur à 250 nm ; et

D) éventuellement d'autres additifs usuels.

2. Composition de moulage marquable au laser selon la revendication 1, **caractérisée en ce que** le composant salin particulaire photosensible B) a été formé en tant que produit de réaction de composés simples contenant des cations.

3. Composition de moulage marquable au laser selon la revendication 1 ou 2, **caractérisée en ce que** le composant B) présente une taille moyenne des particules ($d_{50}$) inférieure à 10 $\mu$m.

4. Composition de moulage marquable au laser selon l'une ou plusieurs des revendications 1 à 3, **caractérisée en ce que** le composant B) contient d'autres cations dérivés d'éléments des périodes 2 à 5 du groupe principal I, outre deux cations différents provenant des groupes selon la revendication 1.

5. Composition de moulage marquable au laser selon l'une ou plusieurs des revendications 1 à 4, **caractérisée en ce que** la proportion pondérale du composant A) est de 50 à 99,95 % par rapport à la masse totale de la composition de moulage.

6. Composition de moulage marquable au laser selon l'une ou plusieurs des revendications 1 à 5, **caractérisée en ce que** le composant A) est choisi dans le groupe consistant en polyacétals, polyesters, polyamides, polyarylèneéthers, sulfures de polyarylène, polyéthersulfones, polysulfones, polyaryléthercétones, polyoléfines, polymères à cristaux liquides et des combinaisons avec l'un ou plusieurs de ces polymères.

7. Composition de moulage marquable au laser selon l'une ou plusieurs des revendications 1 à 6, **caractérisée en ce que** le composant B) comporte des oxoanions inorganiques, des anions d'acides carboxyliques organiques ou des anions de l'acide carbonique en tant qu'anions.

8. Composition de moulage marquable au laser selon la revendication 7, **caractérisée en ce que** le composant B) comporte des oxoanions phosphorés.

9. Composition de moulage marquable au laser selon l'une ou plusieurs des revendications 1 à 8, **caractérisée en ce que** le composant B) comporte une combinaison de deux éléments différents du groupe consistant en cuivre, étain, antimoine et fer en tant que cations.

10. Composition de moulage marquable au laser selon la revendication 8, **caractérisée en ce que** le composant B) comporte des anions de l'acide phosphorique et/ou phosphoreux, des produits de condensation de ceux-ci et éventuellement d'autres ions hydroxyde en tant qu'anions et Cu et Fe, ou Cu et Sn, ou Cu et Sb, ou Sn et Fe en tant que cations.

11. Composition de moulage marquable au laser selon l'une ou plusieurs des revendications 1 à 10, **caractérisée en ce que**, dans le composant B), des combinaisons de ions métalliques sont choisies telles que le composant B) en état non exposé absorbe le rayonnement dans la plage de longueurs d'onde de lumière à utiliser.

12. Composition de moulage marquable au laser selon la revendication 1, **caractérisée en ce que** le composant C) présente un diamètre moyen des particules inférieur à 200 nm.

13. Composition de moulage marquable au laser selon la revendication 1, **caractérisée en ce que** le composant C) présente un indice de réfraction différent de celui du composant A).

14. Composition de moulage marquable au laser selon l'une ou plusieurs des revendications 2, 12 ou 13, **caractérisée en ce que** ledit oxyde inorganique est choisi dans le groupe des oxydes des éléments des périodes 3 à 6 des groupes principaux III et IV, des périodes 5 à 6 du groupe principal V et des périodes 4 à 5 des sous-groupes III à VIII et des lanthanides.

15. Composition de moulage marquable au laser selon la revendication 14, **caractérisée en ce que** ledit oxyde inorganique C) est choisi dans le groupe consistant en $Al_2O_3$, $SiO_2$, minéraux à base de silicates et d'aluminosilicates, verres à base de silicates, $TiO_2$, $ZnO$, $ZrO_2$, $SnO_2$, $Sb_2O_3$, $Sb_2O_5$, $Bi_2O_3$ et des oxydes mixtes de ceux-ci avec d'autres éléments dopants.

**16.** Composition de moulage marquable au laser selon la revendication 15, **caractérisée en ce que** ledit oxyde inorganique C) est sous la forme d'anatase et/ou de rutile.

**17.** Composition de moulage marquable au laser selon l'une ou plusieurs des revendications 1 à 16, **caractérisée en ce qu'**elle contient au moins un des additifs suivants en tant que composant D) : des stabilisateurs pour améliorer la résistance à la lumière, au rayonnement UV et aux intempéries, des stabilisateurs pour améliorer la résistance thermique et thermooxidative, des stabilisateurs pour améliorer la résistance hydrolytique, des stabilisateurs pour améliorer la résistance acidolytique, des lubrifiants, des auxiliaires de démoulage, des additifs colorants, des substances régulant la cristallisation et des agents nucléants, des agents ignifuges, des modificateurs d'impact, des matières de charges et/ou des plastifiants.

**18.** Composition de moulage marquable au laser selon la revendication 17, **caractérisée en ce qu'**elle contient au moins un phénol stériquement encombré en combinaison avec un composé phosphoré en tant qu'additif.

**19.** Procédé pour le marquage au laser de pièces moulées thermoplastiques, comprenant les étapes consistant à:

i) préparer une pièce moulée à partir d'une composition de moulage contenant au moins un polymère thermoplastique semi-cristallin A) et des composants B) et éventuellement C) et/ou D) selon les revendications 1 à 18 ; et
ii) irradier des parties prédéfinies d'au moins une surface de la pièce moulée avec la lumière laser pour causer un changement de l'apparence optique au sites irradiés.

**20.** Pièce moulée pouvant être obtenue par moulage d'une composition de moulage marquable au laser selon l'une ou plusieurs des revendications 1 à 18.

**21.** Pièce moulée marquée au laser pouvant être obtenue par l'irradiation avec la lumière laser d'une pièce moulée obtenue à partir d'une composition de moulage marquable au laser selon l'une ou plusieurs des revendications 1 à 18.

**22.** Utilisation de composés sel mixte particulaires photosensibles B) ou de mélanges de ceux-ci qui changent de couleur, ou provoquent un changement de couleur dans la matière plastique, sous l'action de la lumière laser et qui contiennent plusieurs cations, dont l'un est choisi dans le groupe consistant en Ti, Cr, Mn, Fe, Co, Ni, Cu, Zn, Y, Zr, Nb, Mo, Ag, Sn, Sb, La, Pr, Ta, W, Ce, et dont un autre est choisi dans le groupe consistant en éléments des périodes 3 à 6 des groupes principaux II et III, des périodes 5 à 6 du groupe principal IV et des périodes 4 à 5 des sous-groupes III à VIII du tableau périodique et les lanthanides, les cations contenus étant dérivés d'au moins deux éléments différents ; et

les anions présentant la formule générale $A_aO_o(OH)_y{}^{z-}$, où A = phosphore trivalent ou pentavalent, soufre tétravalent ou hexavalent, molybdène tétravalent ou tungstène hexavalent, a, o et z sont indépendamment des nombres entiers de 1 à 20, et y est un nombre entier de 0 à 10 ; et éventuellement d'oxydes inorganiques particulaires avec un diamètre moyen des particules inférieur à 250 nm, pour le marquage au laser de pièces moulées.

**IN DER BESCHREIBUNG AUFGEFÜHRTE DOKUMENTE**

**In der Beschreibung aufgeführte Patentdokumente**

- EP 190997 A
- EP 330869 A
- EP 400305 A
- EP 542115 A
- US 5063137 A
- EP 797511 A
- US 5489639 A
- EP 764683 A
- EP 808866 A
- WO 9858805 A

- WO 9955773 A
- DE 19905358 A
- WO 0100719 A
- EP 1190988 A
- WO 0178994 A
- DE 10053639 A
- DE 10034472 A
- EP 753536 A
- EP 105451 A
- EP 50265 A

**In der Beschreibung aufgeführte Nicht-Patentliteratur**

- Encyclopedia of Polymer Science and Engineering. John Wiley & Sons, Inc, 1988, vol. 11, 315-489

- Saechtling, Kunststoff-Taschenbuch. Hanser-Verlag, 517-521